## Europäisches Patentamt
## European Patent Office
## Office européen des brevets

(19)

(11) Veröffentlichungsnummer: **0 186 111**
**B1**

(12)

# EUROPÄISCHE PATENTSCHRIFT

(45) Veröffentlichungstag der Patentschrift:
10.05.89

(21) Anmeldenummer: **85116143.0**

(22) Anmeldetag: **18.12.85**

(51) Int. Cl.⁴: **F 16 C 25/04**

(54) **Vorrichtung zur Lagerung von Gewindespindeln.**

(30) Priorität: **22.12.84 DE 3447162**

(43) Veröffentlichungstag der Anmeldung:
**02.07.86 Patentblatt 86/27**

(45) Bekanntmachung des Hinweises auf die Patenterteilung:
**10.05.89 Patentblatt 89/19**

(84) Benannte Vertragsstaaten:
**CH DE FR GB IT LI NL**

(56) Entgegenhaltungen:
**DE-B-1 019 871
GB-A-526 423
US-A-2 068 652
US-A-2 389 687
US-A-3 451 735**

(73) Patentinhaber: **DR.- ING. RUDOLF HELL GmbH,
Grenzstrasse 1-5, D-2300 Kiel 14 (DE)**

(72) Erfinder: **Angelbeck, Rolf, Grüffkamp 26, D-2300
Kiel 17 (DE)**
Erfinder: **Gesell, Reinhard, Weidenkamp 17, D-2314
Schönkirchen (DE)**
Erfinder: **Gössner, Matthias, Meisenweg 8, D-2427
Malente (DE)**

## Beschreibung

### Technisches Gebiet

Die vorliegende Erfindung betrifft eine Vorrichtung zur axialen und radialen Lagerung von rotierenden Drehkörpern, insbesondere Gewindespindeln, wobei das Auftreten von axialen Störkräften aus der Lagerung dadurch vermieden wird, daß die Spindel (2) in mindestens einem vorwiegend radial wirkenden Lager (4) aufgenommen ist, das in seinem äußeren Sitz in Richtung der Spindelachse verschiebbar ist, daß die Spindel (2) an ihrem einen Ende axial gelagert ist, während auf der Gegenseite der Spindel (2) das Loslager (4) axial durch eine Federvorrichtung (6) belastet wird und für Anlagedruck an der axialen Lagerung sorgt.

### Zugrunde liegender Stand der Technik

In Werkzeugmaschinen, Meßanordnungen und insbesondere bei Maschinen der elektronischen Reproduktionstechnik kommen Gewindespindeln zum Transport von Supporten und dergleichen zur Anwendung, an die besonders hohe Genauigkeitsanforderungen gestellt werden. Selbst wenn eine solche Transportspindel in sich sehr genau gearbeitet ist, werden durch kleine axiale Verschiebungen der Spindel, die aus den unvermeidlichen Ungenauigkeiten der Spindellagerung stammen - selbst bei Verwendung hochgenauer Wälzlager - der Supportbewegung periodisch kleine Wegfehler überlagert, die oft nicht tragbar sind. Deshalb ist es üblich, Spindeln, an die besonders hohe Anforderungen gestellt werden, an einer Stirnseite mit einem Innenkonus zu versehen, der mit den Gewindegängen in einem Arbeitsgang bearbeitet wird. In diesem Konus wird die Spindel gegen eine feststehende Körnerspitze gelagert, während auf der Gegenseite der Spindel ein axialfederbelastetes Loslager für konstanten Anlagedruck an der Spitzenlagerung sorgt.

Auch die umgekehrte Anordnung ist üblich, nämlich das Ende der Spindel als Außenkonus und das Gegenlager als Innenkonus auszubilden. Solche Spingellagerungen sind zum Beispiel in der US-A-2 068 652 (Oberbegriff des Anspruchs 1) und der US-A-3 451 735 beschrieben.

Diese bekannten Lagerungsanordnungen versagen jedoch, wenn die Transportspindel sehr lang, dick und somit schwer wird. An der Spitze treten dann zu hohe Flächenpressungen und damit verbunden Schmierprobleme auf. Eine in Wälzlagern gelagerte sogenannte "mitlaufende Spitze" würde auch wieder durch Ungenauigkeiten ihrer eigenen Lagerung axiale Bewegungen in die Spindel einleiten.

Man muß große Spindeln in Wälzlagern gegebenenfalls unter Zuhilfenahme von Stützlagern aufnehmen. Dann jedoch verbietet sich die Spitze als Bezugslager, weil die Lagerung überbestimmt wäre.

### Offenbarung der Erfindung

Die vorliegende Erfindung beschreibt ein axiales Bezugslager, das keine axialen Verschiebungen der Spindel zuläßt, auch wenn diese in Wälzlagern und gegebenenfalls zusätzlichen Stützlagern gelagert ist.

Die Erfindung erreicht dies durch die im Anspruch genannten Mittel.

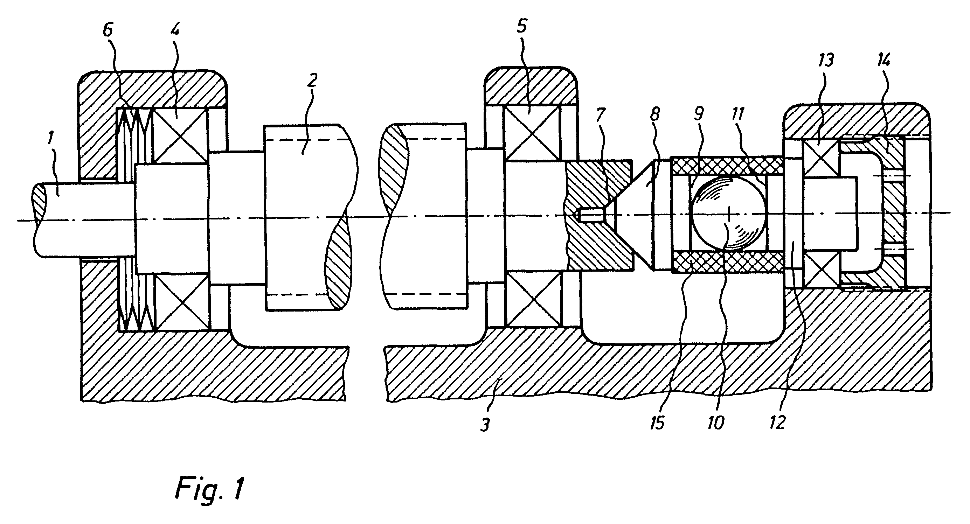

### Kurze Beschreibung der Zeichnung

Die Erfindung wird im folgenden anhand der Figur näher beschrieben.

Die Figur zeigt ein Schema der Lagerung.

### Bester Weg zur Ausführung der Erfindung

Die vom Antriebszapfen (1) her angetriebene Gewindespindel (2) ist im Maschinengrundkörper (3) in zwei Wälzlagern (4) und (5) gelagert, die als sogenannte Loslager ausgebildet sind, d. h. ihre Außenringe sind in den Lagerbohrungen axial verschiebbar. Zwischen dem Außenring des Lagers (4) und der Stirnseite seiner Lagerbohrung ist eine Feder (6) - beispielsweise ein Paket von Tellerfedern - angeordnet. Am entgegengesetzten Ende der Gewindespindel (2) ist in ihre Stirnseite ein Zentrierkonus (7) eingearbeitet. In diesen paßt eine Zentrierspitze (8), die auf ihrer dem Konus abgewandten Stirnseite eine plane Lauffläche (9) aufweist. Die Lauffläche (9) stützt sich auf eine Kugel (10). Diese stützt sich auf ihrer gegenüberliegenden Seite auf die Planfläche (11) eines Druckstücks (12) ab, das in einem Wälzlager (13) ebenfalls längsverschiebbar im Maschinengrundkörper (3) angeordnet ist. Die Lauffläche (9), die Kugel (10) und die Planfläche (11) werden vorzugsweise gehärtet und feingeschliffen.

Der Außenring des Wälzlagers (13) kann über eine Druckschraube (14) in Richtung auf das Wälzlager (4) bewegt werden. Dabei wird über das Wälzlager (13), Druckstück (12), Kugel (10), Zentrierspitze (8), Gewindespindel (2) und Wälzlager (4) das Federpaket (6) gespannt. Eine zwischen Zentrierspitze (8) und Druckstück (12) angeordnete Buchse (15) aus weichelastischem Material gestattet der Kugel (10) kleine Rollbewegungen radial zur Gewindespindel (2).

Durch das beschriebene Spannen der Feder (6) mittels der Druckschraube (14) ist die gesamte Anordnung kraftschlüssig. Die in der Einleitung beschriebenen Lauffehler führen zu kleinen Rollbewegungen der Kugel (10) zwischen ihren Laufflächen. Der Abstand zwischen den Flächen (9) und (11) bleibt jedoch dabei stets konstant, und es werden keine axialen Fehler mehr in die Spindel eingeleitet. Zwischen den Flächen (9) und (11) und Kugel (10) tritt keine sogenannte Bohrreibung auf, weil sie sich stets miteinander um die Längsachse der Gesamtanordnung drehen.

## Gewerbliche Verwertbarkeit

Die Erfindung beschränkt sich nicht auf die Lagerung von Gewindespindeln allein. Sie kann vielmehr überall dort angewendet werden, wo die radialen und axialen Lagerungen von rotierenden Drehkörpern zur Vermeidung gegenseitiger Störungen voneinander entkoppelt werden müssen. Dieses Problem tritt z. B. bei der Lagerung von Druckzylindern in Maschinen zur elektromechanischen Gravur derselben auf.

## Patentanspruch

Vorrichtung zur axialen und radialen Lagerung von rotierenden Drehkörpern, insbesondere Gewindespindeln, wobei das Auftreten von axialen Störkräften aus der Lagerung dadurch vermieden wird, daß die Spindel (2) in mindestens einem vorwiegend radialwirkenden Lager (4) aufgenommen ist, das in seinem äußeren Sitz in Richtung der Spindelachse verschiebbar ist, daß die Spindel (2) an ihrem einen Ende axial gelagert ist, während auf der Gegenseite der Spindel (2) das Loslager (4) axial durch eine Federvorrichtung (6) belastet wird und für Anlagedruck an der axialen Lagerung sorgt, dadurch gekennzeichnet,
daß die Spindel (2) in vorwiegend radial wirkenden Lagern (4) und (5) aufgenommen ist, die in ihren äußeren Sitzen in Richtung der Spindelachse verschiebbar sind,
daß an einer Stirnseite der Spindel ein zentrischer Innenkonus (7) eingearbeitet ist,
daß eine Lagerspitze (8) in diesen Innenkonus (7) eingreift, deren der Spindel abgewandtes Ende als Planfläche (9) ausgebildet ist und sich gegen eine Kugel (10) stützt,
daß diese Kugel (10) auf ihrer axial entgegengesetzten Seite gegen die plane Stirnfläche (11) eines Druckstücks (12) anliegt,
daß dieses Druckstück (12) in einem Lager (13) drehbar ist,
daß dieses Lager (13) in seinem äußeren Sitz längsverschiebbar ist und durch eine Druckschraube (14) in Richtung der Spindelachse einstellbar ist,
daß an mindestens einem der die Spindel tragenden Radiallager (4) Federn (6) angeordnet sind, die beim Anziehen der Druckschraube (14) axial gespannt werden, und
daß zwischen der Lagerspitze (8) und dem Druckstück (12) eine weichelastische Buchse (15) angeordnet ist.

## Claim

A device for the axial and radial mounting of rotating bodies of revolution, in particular screw-threaded spindles, wherein the occurrence of axial disturbing forces from the mounting is prevented by the fact that the spindle (2) is received in at least one bearing (4) acting predominantly radially, which is displaceable in its external seat in the direction of the axis of the spindle, that the spindle (2) is axially journalled at its one end whereas at the opposite end of the spindle (2), the loose bearing (4) is axially stressed by means of a spring device (6) and ensures the contact pressure on the axial mounting, characterised in that the spindle (2) is received in bearings (4) and (5) acting predominantly radially, which are displaceable in the direction of the spindle axis in their external seats,
that a central internal taper (7) is machined into an end face of the spindle,
that there engages into this internal taper (7) a bearing tip (8) the end of which facing away from the spindle is formed as a plane surface (9) and bears against a ball (10),
that this ball (10) bears on its axially opposite side against the plane end face (11) of a thrust element (12), that this thrust element (12) is rotatable in a bearing (13),
that this bearing (13) is longitudinally displaceable in its outer seat and is adjustable in the direction of the spindle axis by means of a pressure screw (14), that springs (6) are arranged on at least one of the radial bearings (4) carrying the spindle, which are stressed axially upon tightening the pressure screw (14), and that a soft elastic bushing (15) is mounted between the bearing tip (8) and the thrust element (12).

## Revendication

Dispositif pour supporter axialement et radialement des corps de révolution en rotation, notamment des broches filetées, dispositif dans lequel l'apparition d'efforts axiaux parasites dûs aux paliers, est évitée du fait que la broche (2) est saisie dans au moins un palier (4) dont l'effet s'exerce de façon prépondérante radialement, et qui est susceptible de se déplacer en direction de l'axe de la broche dans son logement externe, la broche (2) étant en butée axiale à l'une de ses extrémités, tandis que sur le côté opposé de la broche (2) le palier libre (4) est sollicité axialement par un dispositif à ressort (6) et assure la poussée d'application contre la butée axiale, dispositif de support caractérisé en ce que:
- la broche (2) est saisie dans des paliers (4) et (5) dont l'effet s'exerce de façon prépondérante radialement, ces paliers étant susceptibles de se déplacer en direction de l'axe de la broche dans leur logement externe,

- un cône intérieur de centrage (7) est usiné sur une face frontale de la broche,

- une pointe de pivot (8) vient en prise dans ce cône interne (7), l'extrémité de cette pointe de pivot opposée à la broche revêtant la forme d'une surface plane (9) et prenant appui contre une bille (10),

- cette bille (10) s'appliquant par son côté axialement opposé, contre la face frontale plane (11) d'une pièce de poussée (12),

- cette pièce de poussée (12) est susceptible de tourner dans un palier (13),

- ce palier (13) est susceptible de se déplacer longitudinalement dans son logement externe et il est réglable en direction de l'axe de la broche grâce à une vis de pression (14),

- à au moins un des paliers radiaux (4) supportant la broche, sont associés des ressorts (6) qui sont comprimés axialement lors du serrage de la vis de poussée (14),

- une douille élastique molle (15) est disposée entre la pointe de pivot (8) et la pièce de poussée (12).

Fig. 1